# EUROPEAN PATENT APPLICATION

(11) **EP 1 498 312 A1**
(43) Date of publication of application: **19.01.2005**
(21) Application number: 04077092.7
(22) Date of filing: 19.07.2004
(51) Int. Cl.: B60Q 1/30, B60Q 11/00

(54) **Linking system for lighting of a trailer**

(30) Priority: 18.07.2003 NL 1023951
(71) Applicant: ECS Electronics B.V., 4825 AR Breda (NL)
(72) Inventor: De Bruijn, Peter, 4817 KW Breda (NL)
(74) Representative: Hylarides, Paul Jacques

(57) **Abstract**

The invention relates to a linking system for arranging between a lighting system of a trailer (1) and a lighting system of a vehicle (2) pulling the trailer, comprising means for detecting the state of parts of the vehicle lighting system (8,9) and a control member (3,4) coupled to the detecting means (9) for coupling the trailer lighting system (1) to an electrical energy source (13) of the vehicle in response to the detecting means (8,9), such that corresponding parts of the trailer lighting system (1) give substantially the same lighting image as the vehicle lighting system (2). Without too much intervention in the wiring (5,14) of the vehicle lighting system (2) the switching on and off of the vehicle lighting is detected and transmitted to the control member (3,4).

## Description

The present invention relates to a linking system for arranging between a lighting system of a trailer and a lighting system of a vehicle pulling the trailer.

Such a system is for instance known from US-A-4,842,524. The vehicle lighting system is equipped close to the tail lighting of the vehicle with a pair of connectors of the female and male type. When a trailer is coupled to the vehicle, the trailer lighting system has to be electrically coupled to the vehicle lighting system. The trailer is provided with tail lights, brake lights, indicator lights, and possibly reverse lights and/or fog light(s) which must come on together with the lights on the rear of the vehicle. A T-shaped cable set is placed for this purpose between the pair of connectors of the vehicle lighting system. The cable set is likewise provided with a pair of connectors of the female and male type which are connected to those in the vehicle. The other end of the cable set is connected to a connector of the lighting system of the trailer. The cable set transmits voltage and current from the vehicle lighting system to the trailer lighting system. A lighting image consistent with the vehicle is hereby obtained on the trailer. A drawback of this known linking system is that a different cable set must be used for each vehicle, since each vehicle manufacturer employs its own specifications for the connectors in the vehicle lighting system.

An object of the present invention is to provide a linking system which can be connected to any random vehicle lighting system. A further object is to provide a linking system which can be connected such that the wiring in the vehicle lighting system is kept intact as far as possible.

To this end the linking system according to the present invention is characterized by:
- means for detecting the state of parts of the vehicle lighting system and
- a control member for coupling the trailer lighting system to an electrical energy source of the vehicle in response to the detecting means such that corresponding parts of the trailer lighting system give substantially the same lighting image as the vehicle lighting system, wherein the detecting means are coupled via wiring to the control member.

Without too much intervention in the wiring of the vehicle lighting system the switching on and off of the vehicle lighting is detected and transmitted to the control member. The trailer lighting is switched on and off in corresponding manner in response to the detected signals. The power supply for the trailer lighting is supplied directly from an electrical energy source of the vehicle. Since the wiring of the cable set between vehicle lighting and control member carries a low current, the wiring can be embodied with wire of a small quadrature. This produces a cost saving compared to the usual cable sets.

The control member is preferably connected by means of wiring of standard quadrature to the trailer lighting system for transmitting current from the power supply of the vehicle to the trailer in response to the detecting means to turn on the correct lighting image.

In addition to lighting, a constant power supply and a power supply connected by means of the ignition lock of the tractive vehicle can be provided to the pulled vehicle for the purpose of supplying users of electricity.

The detection of the switching on and off of the lighting of the vehicle can be performed in different ways. A first method is by detecting the presence of a magnetic field around current-carrying conductors, for instance using a Hall generator, Reed switch or metal saturation sensor. A second method is inductive detection of a change in the strength of the current through a conductor. A third method is by detecting the voltage. A connector with a needle-shaped element is used for this purpose, wherein the needle-shaped element penetrates the insulation of the existing wire and comes into contact with the copper without damaging this copper.

The control member preferably comprises a microprocessor. The control member can be mounted in the vehicle, preferably in a socket provided on the vehicle.

The linking system further comprises means for transferring the detected signals to the control member. These transfer means can comprise electric wires or wireless transfer means.

The linking system preferably further comprises warning means for generating a warning signal when the vehicle lighting system and/or the trailer lighting system do not function properly. The warning means generate an acoustic and/or visual signal to the driver if operation of the lighting is faulty.

The linking system preferably further comprises switch-off means for switching off the fog light of the vehicle and/or the Park Distance Control (PDC) system when the trailer is coupled to the vehicle.

Finally, the invention also relates to a vehicle provided with a linking system.

The invention will be further elucidated on the basis of the annexed drawings. In the drawings:
Figure 1 shows a schematic representation of a linking system according to the invention arranged between the lighting system of the vehicle and that of the trailer;
Figure 2 shows a schematic representation of a Hall-effect sensor;
Figure 3 shows a schematic representation of a metal saturation sensor, and
Figure 4 shows a schematic representation of a needle clip sensor.

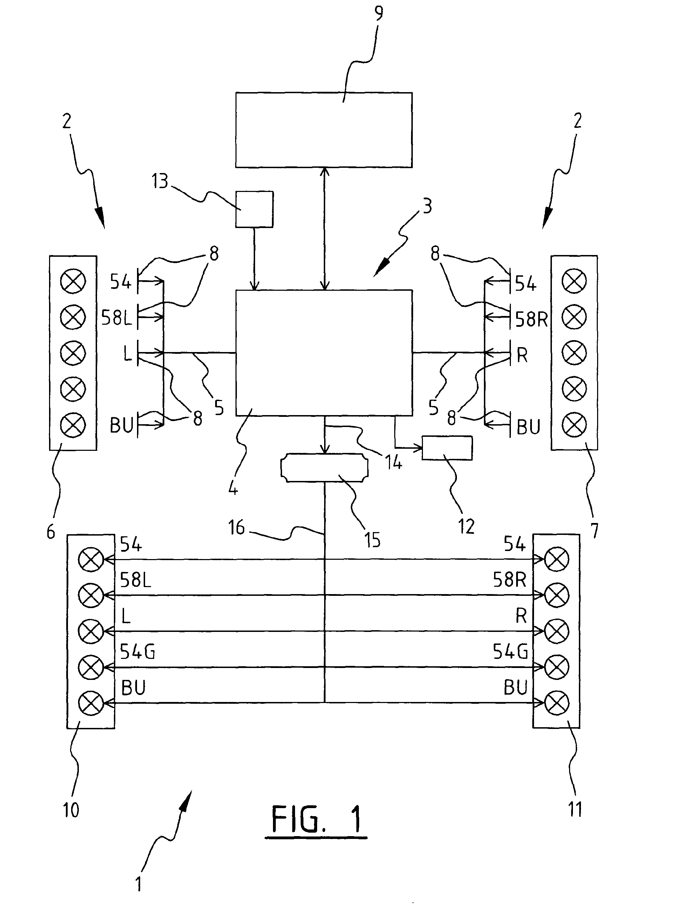

Figure 1 shows a schematic view of a cable set according to the invention arranged between a lighting system 1 of a trailer and a lighting system 2 of a vehicle pulling the trailer. The cable set comprises a microprocessor 4. Microprocessor 4 requires a 12 volt power supply 13 and optionally a connection to a signalling module 9 close to the driver of the vehicle. This signalling module 9 can transmit an error message from the vehicle lighting system to the driver via a wire or wirelessly. When the signalling module is connected to microprocessor 4 of the cable set, a malfunctioning trailer light 10, 11 can also be detected by module 9, and the driver made aware via the signalling module 9. Signalling module 9 is placed for instance on the dashboard of the vehicle. The signalling module 9 further has a button with which the rear fog light can be switched on. When the rear fog lamp is switched on, the trailer fog light is switched on instead of the vehicle fog light. The fog light will of course only go on when the lighting is switched on and goes off automatically when the lighting is switched off.

The cable set has two universal cables 5 which are the same and which can be connected to the left and right-hand tail lights 6,7 of vehicle 2 without making use of usual connectors or damaging the car cabling.

Microprocessor 4 of the cable set can translate the information to the correct trailer lighting. Many modern vehicles are equipped with a so-called Park Distance Control (PDC) system 12 which, using sound, communicates the distance to fixed objects behind the vehicle to the driver during reversing. This PDC system 12 can be disabled.

Microprocessor 4 comprises a processor unit and a control unit 3. The signals coming from the sensors are converted in microprocessor 4 into control signals for controlling the lighting system 1 of the pulled trailer. The control signals are transmitted by means of wiring 14 and a socket 15 to the left and right-hand tail lights 10,11 of the trailer.

The detection of the signal of the lighting of the vehicle can take place by means of different detectors 8. A first method is to use an inductive sensor. This sensor responds to the change in the magnetic field around a wire when the current is switched on and off. A second method is to use a Hall effect sensor. This sensor responds to the change in a magnetic field. If the wire is carrying current, the Hall effect sensor will respond hereto by generating a fixed output signal. A following method is to have a Reed switch generate a pulse to a control unit at the moment that a wire in the vicinity begins to conduct current. The Reed switch is in fact a mechanical switch which, in a gas-tight glass housing, can transmit many hundreds of thousands of switching moments. It is further possible, using a metal saturation sensor, to detect whether a wire is carrying current. The operation of this new type of sensor is explained below. Finally, it is possible using a needle clip sensor to make direct contact with the current-carrying wire by having a needle make contact via the insulation with the copper core of the current-carrying wire.

There follows hereinbelow a description of the different methods of detecting current:

### Current detection with Hall effect sensor

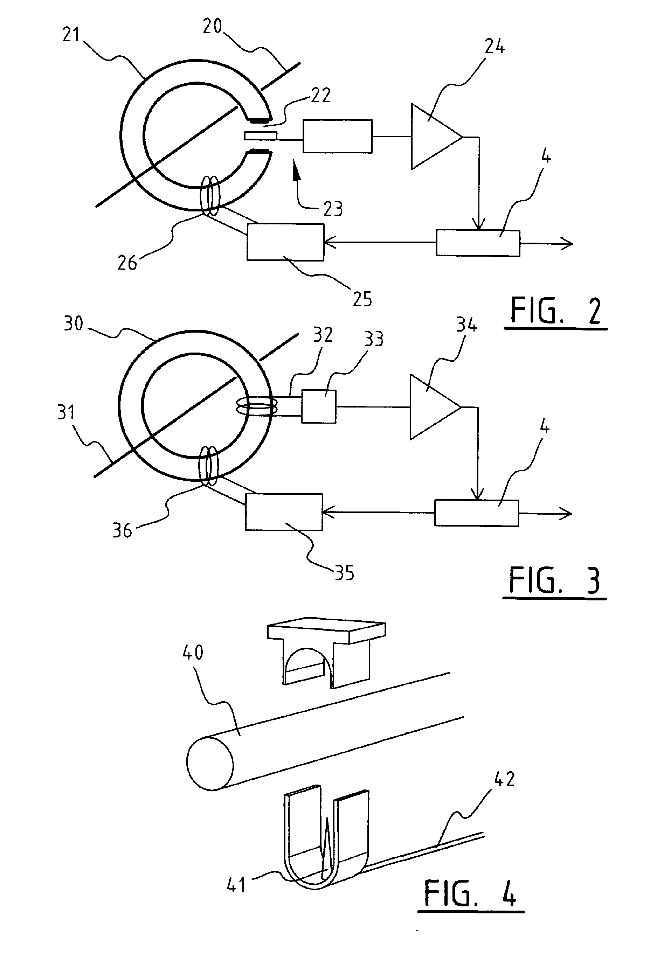

Figure 2 shows a schematic representation of the technique for detecting a magnetic field around an electric wire 20 with a ferrite clip 21 around the wire 20. The Hall effect sensor 23 can be placed in the air gap 22. The signal is transmitted via an amplifier 24 to microprocessor 4. For a better detection result the core is slightly magnetized (indicated with reference numerals 25,26).

### Current detection by metal saturation

Figure 3 shows a schematic representation of a metal saturation sensor. Use is also made here of a ferrite core 30 which passes round the wire 31 for measuring 31, though here without air gap. A coil 32 is made around the ferrite 30. The coil is part of a free-running oscillator 33. The oscillator frequency depends on the magnetic conductivity of the medium around the coil. If an air gap is made, the frequency will increase, which will also happen if a second coil in the core is short-circuited. The second coil extracts energy from the oscillator. The signal is transmitted via an amplifier 34 to microprocessor 4. For a better detection result the core can be re-magnetized by means 35,36 suitable for this purpose.

In this arrangement an almost maximum saturation level is obtained using a coil or permanent magnet, whereby oscillator 33 becomes very sensitive to magnetic field changes and makes this known by frequency changes. The current through the wire can be measured by measuring the frequency.

### Current detection by induction measurement

An induction sensor is again also a closed ferrite round the wire for measuring with a coil which can detect the moment a power source is switched on and off and can transmit this to a microprocessor which in turn can take action on the basis thereof.

A drawback is that only moments when switching on and off takes place can be detected. Since in the car manufacturing industry the lights are switched, this technique in combination with one of the two above-mentioned techniques can provide an operationally reliable solution. Since an induction sensor is known art per se, no illustration is shown.

### Voltage detection by needle clip system

Figure 4 shows a representation of a needle clip sensor. This clip is used to make a hard connection to the wires 40 of the vehicle. The clip has a needle 41 which penetrates the insulation of the existing wire 40 and comes into contact with the copper without damaging this copper. The clip can preferably be fastened round the wire in a single movement of the hand. The signal is transmitted via wire 42 to the microprocessor.

Since wiring 5 of the cable set between the vehicle lighting 2 and microprocessor 4 carries a low current, wiring 5 can be embodied with wire of a small quadrature. This achieves a cost-saving compared to usual cable sets.

The cable set according to the invention can be applied to different vehicles. The cable set comprises universal connectors which can be connected to existing vehicle tail lights of different motor vehicles. The length of the cable loom to the vehicle tail lights is readily adjustable. Finally, the system can be easily expanded with a C2 function, which is mandatory in a number of European countries (C2 function is a monitoring function of the operation of the indicator lights of the pulled vehicle).

Using the connections according to the invention the wiring of the vehicle remains in principle intact. The chance of failure of the lighting system is hereby reduced. It may be that legislation makes it necessary to branch one or more lights directly so that no time delay occurs in the lighting system. A direct branch could be necessary for the brakelight to cause the brakelights to light up directly in response to operation of the brake pedal.

## Claims

1. Linking system for arranging between a lighting system of a trailer and a lighting system of a vehicle pulling the trailer, **characterized by**:
- means for detecting the state of parts of the vehicle lighting system, and
- a control member for coupling the trailer lighting system to an electrical energy source of the vehicle in response to the detecting means, such that corresponding parts of the trailer lighting system give substantially the same lighting image as the vehicle lighting system, wherein the detecting means are coupled via wiring to the control member.

2. Linking system as claimed in claim 1, wherein the detecting means comprise means for detecting the presence of a magnetic field.

3. Linking system as claimed in claim 2, wherein the detecting means comprise a Hall generator, Reed switch or metal saturation sensor.

4. Linking system as claimed in claim 1, wherein the detecting means comprise means for inductive detection of a change in current.

5. Linking system as claimed in claim 1, wherein the detecting means comprise means for detecting the voltage.

6. Linking system as claimed in any of the foregoing claims, wherein the control member can be arranged in the vehicle, preferably in a socket provided on the vehicle.

7. Linking system as claimed in any of the foregoing claims, further comprising warning means for generating a warning signal when the vehicle lighting system and/or trailer lighting system do not function properly.

8. Linking system as claimed in any of the foregoing claims, further comprising switch-off means for switching off the fog light of the vehicle and/or the Park Distance Control (PDC) system when the trailer is coupled to the vehicle.

9. Vehicle provided with a linking system as claimed in any of the foregoing claims.
